# EUROPEAN PATENT SPECIFICATION

(11) **EP 3 133 268 B1**
(45) Date of publication and mention of the grant of the patent: **30.09.2020**
(21) Application number: 15182049.5
(22) Date of filing: 21.08.2015
(51) Int. Cl.: F02C 9/00, F01K 13/02

(54) **METHOD FOR OPERATING A POWER PLANT**
VERFAHREN ZUM BETRIEB EINES KRAFTWERKS
PROCÉDÉ D'OPÉRATION D'UNE CENTRALE ÉLECTRIQUE

(43) Date of publication of application: 22.02.2017
(73) Proprietor: Ansaldo Energia IP UK Limited, London W1G 9DQ (GB)
(72) Inventor: Arias Chao, Manuel, 8002 Zurich (CH); Reiter, Wilhelm, 79790 Kuessaberg (DE); Lilley, Darrel Shayne, 5453 Remetschwil (CH)
(74) Representative: Bernotti, Andrea

(56) References cited:
- EP-A2- 2 657 468
- US-A1- 2015 184 549

## Description

### TECHNICAL FIELD

The present disclosure relates to a method for operating a power plant as described in claim 1. It further relates to embodiments for carrying out the method.

### BACKGROUND OF THE DISCLOSURE

It is known in the art to operate a power plant applying a pre-defined operating concept. For instance, it is known to operate a gas turbine at a given setting of a variable inlet guide vane or so-called VIGV setting against load, or to control the gas turbine exhaust temperature, so-called TAT, or a parameter representing the turbine firing temperature, so-called TIT. Moreover, control of burners in operation or of fluids injected for exhaust emission control, such as steam or water, may be controlled versus the engine load. It is appreciated to that extent, that ambient conditions may be considered for determining the load control parameter. It is appreciated that further operation controls of a turbine, such as inlet air preheating, may also be controlled. It is furthermore well-appreciated by the person skilled in the art that some operating parameters to be controlled, such as the combustion temperature, may not be directly measured. A parameter representative of the firing temperature of a gas turbine, so called TIT, for instance, is according to the art calculated based on values such as, but not limited to, the compressor pressure ratio and the exhaust temperature, applying the so-called TIT formula. The TIT formula is usually determined based upon a heat balance during commissioning of the engine. For a combined cycle power plant, for instance, a gas turbine target load setting may be determined by a difference of the plant target load setting and the power output of the steam turbine.

In some systems known in the art the engine operating concept is defined once during a design and/or development and/or commissioning phase and remains constant during operation of the power plant, and takes into account the best available knowledge of component characteristics and power plant operator demands. For instance, the operating concept may be tuned to a trade-off between the fuel consumption per power output, the related lifetime consumption and maintenance cost, and the suppositious fuel cost and revenue per power output.

EP 2 071 157 teaches to make a multitude of operating concepts available to the power plant operator, which are based upon a multitude of the above-mentioned TIT and TAT settings. This is intended to account, for instance, for variable fuel cost. If for instance fuel costs are low, the temperature control settings may be set to lower temperatures, thus sacrificing efficiency and accepting a higher fuel consumption per power output for the benefit of lower lifetime consumption and maintenance cost.

From EP 2 657 468 a lifecycle cost enhancing system for a power plant is known, in which a computing device is configured to monitor a first parameter of the power plant, receive a target load representing a desired power output of the power plant, employee a first model of the power plant to simulate operation of the power plant and determine output of the first model including at least a performance indicator of the power plant, an initial setpoint for an operation parameter of the power plant, and an estimated lifecycle cost of the power plant responsive to at least the monitored parameter of the power plant, augment the operation parameter using the output of the first model responsive to a lifecycle cost based objective function such that a lifecycle cost based objective function is solved for reduced lifecycle cost, thereby producing an augmented setpoint for the operation parameter, and furthermore to generate at least one of a curve including the cost of power production versus power output of the power plant using the augmented setpoint. According to said teaching, the first model may include a controls model of the power plant configured to determine the initial setpoint based on at least a physical detail of the power plant responsive to the target load. The initial setpoint may be a firing temperature of a gas turbine of the power plant. The first model may further include a performance model of the power plant configured to determine the value of the performance indicator responsive to the monitored parameter of the power plant and based on at least a physical detail of the power plant. The performance indicator may be an efficiency of the power plant. The first model may include a lifecycle cost model of the power plant configured to determine the estimated lifecycle cost of the power plant based on at least cost information about the power plant. The cost information may include maintenance cost information. The computing device may further be configured to iterate employing the first model and augmenting by employing the first model with output of the augmenting.

Accordingly, a method of operating a power plant applying the above-referenced steps is disclosed in EP 2 657 468.

The performance model of the power plant applied according to the teaching of EP 2 657 468 which is supplied to determine a performance indicator, however, is a static performance model based upon hypothetical assumptions about the power plant response to a variation of an operation parameter of the power plant. It does not account, in particular, for a variability of said response due to power plant degradation over lifetime.

Another method of operating a power plant is disclosed in document US2015/184549. However said method is not sufficiently cost efficient.

### LINEOUT

### OF THE SUBJECT MATTER OF THE PRESENT DISCLOSURE

It is an object of the present disclosure to provide a method of the kind initially mentioned which enables an improved prediction of the power plant response to a variation of certain operation parameters. It is a more specific object of the present disclosure to provide a method of the kind initially mentioned which enables an improved prediction of the power plant response to a variation of certain controlled operation parameters. It is further an object of the present disclosure to provide a method of the kind initially mentioned which accounts for a variability of said response due to power plant degradation and aging. In another aspect, manufacturing and assembly variability may be accounted for.

This is achieved by the subject matter described in claim 1.

Further effects and advantages of the disclosed subject matter, whether explicitly mentioned or not, will become apparent in view of the disclosure provided below.

Accordingly, disclosed is a method for operating a power plant, the method comprising providing a power target setpoint to a power plant controller and, dependent on said power target setpoint, determining a setpoint of at least one first power plant operation parameter. The at least one first power plant operation parameter may include, in a non-limiting manner, one or more of a variable inlet guide vane setting, a setting of a turbine exhaust temperature, a parameter representing a turbine firing temperature, a fuel flow rate, burner settings, an emission control steam or water flow rate, a compressor inlet preheating setting, and/or other power plant operation control parameters familiar to the skilled person. In particular, those control settings may be an output from a power plant operating concept. The method further comprises operating the power plant at a set power output and with said at least one first operation parameter adjusted to the respective setpoint of the at least one operation parameter. The skilled person will readily appreciate that the set power output will equal the power target setpoint if the power target setpoint is below or equal to a maximum power plant power output, and equals the maximum power plant power output if the power target setpoint is above the maximum power plant power output. A maximum power output may to this extent be understood as the power output achieved for example at a maximum firing temperature and working fluid mass flow of a gas turbine. The method further includes applying a measurement to determine an actual value of at least one second operation parameter. For instance, if a gas turbine is operated in an inlet guide vane controlled domain, that is, if both the exhaust temperature and the firing temperature are below and admissible value, a first operation parameter may be a variable inlet guide vane setting, and a second operation parameter may be an exhaust temperature. If the gas turbine is operated in a temperature controlled domain, that is, one of the exhaust temperature and firing temperature are at their maximum admissible value, the at least one first operation parameter may comprise said temperature value and the at least one second value may comprise the variable inlet guide vane position. Further, a theoretical power plant model is applied to determine an expected value of said at least one second operation parameter. The expected value of said at least one second operation parameter is compared to the measured value of the at least one second operation parameter. The method comprises applying a calibration loop for the theoretical power plant model, said calibration loop comprising: applying a comparison step to determine a deviation between the expected value of the at least one second operation parameter and the measured value of the at least one second operation parameter, modifying the theoretical power plant model, and re-calculating the expected value of the at least one second operation parameter. The calibration loop is repeated until a best match between the expected value of the at least one second operation parameter and the measured value of the at least one second operation parameter is achieved, thus obtaining a calibrated power plant model after terminating the calibration loop.

It will be appreciated that the best match would ideally be a coincidence of the expected value of the at least one second operation parameter and the measured value of the at least one second operation parameter. For instance, the calibrated power plant model would, at a given power plant power output, and with the exhaust temperature at a given value, ideally calculate exactly the actual variable inlet guide vane position. The skilled person will in this respect readily appreciate that an inlet guide vane position is an angular position of the variable inlet guide vane with respect to a compressor inflow direction. However, the power plant model may be calibrated to achieve the best match of multiple second operation parameters, such as, for a given exhaust temperature of the gas turbine, the variable inlet guide vane position, exhaust emissions, the compressor pressure ratio, and so forth. Thus, in order to achieve a best match between the actual, or measured, respectively, and the expected, or calculated, values for a multitude of second operation parameters may require the solution of a multitude of optimization problems. A best match thus may be defined as a minimum overall deviation between the measured and the expected values for the second operation parameters. For instance, but not limited to, a non-linear least-squares method, a Bayesian interference, Monte Carlo sampling, Kalman filters or any other deterministic or stochastic machine learning approaches may be applied to solve this multi-dimensional optimization problem. Further, the power plant model may be a combination of sub models representing the power plant sub- systems, such as, but not limited to, an emission model, a steam turbine model, a pulsation model, a surge model, a gas turbine and/or steam turbine thermodynamic model, and so forth. Each sub- model may apply, for instance, but not limited to, a physics-based model, a surrogated model, and/or a hybrid thereof. A surrogated network may for instance comprise a neural network, support vector machine, trees, Kriging, co-kriging model, gradient enhance Kriging, response surfaces, polynomial models, and/or Gaussian processes.

An estimation of uncertainty of the model outputs may be performed by statistical analysis of measurement and power plant model uncertainties. Uncertainty contributors, a prescribed set of uncertainty levels may furthermore be provided by the engine manufacturer based upon prior knowledge.

An initiation of the calibration loop may be performed with a certain frequency which depends on user requirements, operating conditions, and of the sub- system considered. For instance, calibration of an emission model may be performed every few seconds when a gas turbine operates in an area where emissions may strongly respond to slight changes of the operating conditions. On the other hand, at the same operating conditions the calibration of the thermodynamic model may be performed every few minutes only.

The calibrated power plant model, or the outputs therefrom, when compared to an uncalibrated manufacturer provided power plant model, or the outputs therefrom, respectively, may provide information about the engine health status. It may also serve to report about possible wrong measurement signals.

The power plant model may compute non-measurable model parameters deducted from measurements. For instance, a gas turbine firing temperature may not be directly measured, but a parameter representative of the firing temperature, so-called TIT, may be determined in applying an algorithm based upon the exhaust temperature, the compressor pressure ratio, and other parameters. In one instance, the calibration loop may make use of information about the actual fuel composition, or the fuel lower heating value, respectively, the exhaust temperature, the temperature of the working fluid after the compressor, and certain thermodynamic characteristics of the working fluid in order to determine the firing temperature in applying a heat balance. The algorithm for determining the TIT value may be adapted and calibrated accordingly. In another instance the algorithm for determining TIT may be omitted in favor of applying the heat balance to determine the firing temperature.

In certain embodiments of the herein disclosed method it may comprise obtaining the at least one first operation parameter from a power plant operating concept, predicting a response of the power plant operating parameter on a variation of the at least one first operation parameter in applying the calibrated power plant model, determining a multitude of optimum setpoints of the at least one first operation parameter providing a match with the power plant operator target versus corresponding multitude of input values of the power plant operating concept, wherein the input values are representative of a multitude of power plant operating parameters, and modifying the power plant operating concept in that a control output value of the at least one first operation parameter at a power plant operating parameter corresponds to the optimum setpoint for the multitude of power plant operating parameters. Said power plant operating concept may be stored in the power plant controller. The power plant operating parameter may comprise a power plant power output and the operating concept may comprise a setting of the at least one first operation parameter versus the power plant power output. It will be readily appreciated by and is well known to the skilled person that said operating concept may be dependent on certain ambient conditions, and/or the power plant power output. In particular a gas turbine power output, may be normalized to reference ambient conditions, and the operating concept comprises the setting of the at least one first operation parameter versus the thus normalized power output.

The method further comprises applying the calibrated power plant model to forecast the at least one second operation parameter for a multitude of values of the at least one first operation parameter and at least for the set power output, predicting a response of a power plant operating parameter on a variation of the at least one first operation parameter in applying the calibrated power plant model, adapting the setpoint of the at least one first operation parameter to adjust the power plant operating parameter to match with a power plant operator operation target, and operating the power plant at the set power output with the at least one first operation parameter adapted to the adjusted setpoint of the at least one first operation parameter.

The operator operation target may comprise one or more of a maximum revenue from sold power output versus the operating cost, a reliable operation of the power plant, or, a reliable provision of offered power output, a reduction of environmental impact, and other targets, or a balanced combination thereof. Moreover, an accepted risk level and envisaged time horizon may be considered in defining the operator operation target.

The power plant operating parameter, in this respect, comprises at least one of:
operation cost per power output;
environmental impact;
power plant reliability;
power plant power reserve;
power plant frequency response capability.

It is understood that "per power output" in this respect means per unit power output, which may be specified for instance as megawatts or megawatt-hours. The operation cost may accordingly be specified as a monetary unit and be related to a produced cumulated energy in a time unit, measured, for instance, in megawatt-hours, or as a monetary unit per time unit and be related to a megawatt power output.

An environmental impact may comprise in particular the emissions of carbon dioxide, nitrogen oxides, carbon monoxide, and/or unburned hydrocarbons, but may also consider a water consumption, in particular in arid environments, or the thermal loading for instance on a river used for plant cooling.

Further, it is apparent that the power plant operating parameter, for instance the temperature level at which an engine is operated, has an impact on the reliability and lifetime consumption of the power plant or parts of it. Further, various parameters of the power plant operation may have an impact on the power plant power reserve, on the time in which additional power may be provided to the grid, and on the power plant frequency response capability.

The operation cost per power output is calculated one the basis of at least one of
the fuel consumption per power output;
the fuel cost, that is, the cost per unit fuel consumed;
maintenance cost;
lifetime consumption per power output;
water consumption per power output;
water cost, that is, the cost per unit water consumed;
capital cost per power output
emission tax per power output.

The operation cost per power output may also, for instance, comprise a cost parameter taking into account the availability of the plant, meaning that varying the operational state of the power plant may have an impact on the lifetime and degradation of essential parts of the plant, may increase or decrease the wear and subsequently the time interval between scheduled overhauls and costs of overhauls, which comprises the cost of spare parts, the cost for maintenance personnel, the cost for replacement energy, and fixed cost during plant downtime.

Another aspect of operation costs to be considered by an appropriate cost parameter may be the risk of unscheduled maintenance, which is a monetary risk also. Unscheduled maintenance is done if critical parts show unexpected wear, degradation or failure. It may be assumed, in this respect, that generally the risk of unscheduled plant downtime is higher than the cost for scheduled plant downtime. Said cost factors may be considered part of the maintenance and/or lifetime consumption related cost.

It is, in another aspect of the disclosed method, conceivable to issue a maintenance request or warning if the certain operation parameters, or a combination of operation parameters, is more than a certain threshold value off the design value. This might provide an indication for wear, damage, and the like.

The operation cost per power output may be considered by an operation cost model. The operation cost model may be part of a business model.

The fuel consumption per power output may be expressed as the fuel mass flow per megawatt output, or as a fuel mass consumed per megawatt-hour. The water consumption per power output may be expressed as a water mass flow per megawatt output or as a water mass consumed per megawatt-hour. Maintenance cost may vary dependent on the operating state. For instance, it may be assumed as a general rule of thumb that with operation at a higher temperature levels the maintenance cost per power output will rise, and availability might tend to decrease with higher temperature levels. A lifetime consumption per power output may be expressed as a lifetime consumed per megawatt-hour output; it is apparent to this extent that also a monetary value needs to be assigned to the consumed lifetime. A capital cost may be assumed constant over any time unit under the assumption of an interest rate, and a capital cost per power output is inversely proportional to the megawatt power output. Capital cost, among others, is a factor to be taken into account when considering downtime cost. Essentially the same as for capital cost may apply for instance for the salary cost of operating personnel. The emission tax per power output may be expressed as monetary units per megawatt-hour power output, or as monetary units per time unit and megawatt power output.

As to the operation cost, it may be said that certain influencing factors may have opposing influence. For instance, it may, as a general rule of thumb, be assumed that the power plant efficiency increases and thus the fuel consumption per power output decreases with higher temperature levels. On the other hand it may be reasonably assumed that lifetime consumption per power output and maintenance cost per power output increase with higher temperature levels.

Adjusting the power plant operating parameter to the power plant operator targets may comprise considering at least one of
an actual market price for power delivery,
a forecast market price development for power delivery,
an actual market price for power reserve provision,
a forecast market price for power reserve provision,
an actual market price for frequency response capability provision,
a forecast market price for frequency response capability provision.
The above-mentioned factors are representative of the revenue and may be considered in a revenue model. The revenue model may be part of a business model.

The higher a market price for power delivery is, the more an operation at a high power output will be favorable. On the other hand, this may be offset by a market price for power reserve provision or for frequency response capability provision, which may render an operation of the power plant below its rated maximum power output favorable. The forecasts may be helpful in developing a power output schedule over a given time frame. To this extent, the cost model may also consider a forecast for the fuel price over said given time frame. The forecasts may also comprise a forecast of the ambient conditions, such as for instance ambient temperature, to predict the operating state at a certain megawatts power output. For instance, when operating a gas turbine, the normalized power output or load of the gas turbine will, for a given megawatts power output, the higher at high ambient temperatures than at low ambient temperatures, resulting in different operating states.

In applying a cost model and a revenue model as lined out above, the method may comprise calculating an actual operation cost per time unit at multiple load setpoints, calculating an actual revenue per time unit at multiple load setpoints, determining a load setpoint of maximum margin per time unit, and providing said load setpoint of maximum margin as a power target setpoint to the power plant controller. That is, a load setpoint of maximum surplus revenue per time unit versus operating cost per time unit is determined, and the power plant is operated at said load setpoint of maximum surplus.

The method may further comprise determining a forecast of operation cost per time unit for a given time interval and for a multitude of load setpoints and at a multitude of instances during the time interval, determining a forecast of revenue per time unit for a given time interval and for a multitude of load setpoints and at a multitude of instances during the time interval, and determining a forward power offer curve generating a maximum margin during the time interval. In this instance the method may further comprise forwarding said forward power offer curve to a power dispatch controller, and providing at any instance during the time interval a power target setpoint according to said forward power offer curve to the power plant controller.

The method may comprise applying a business model which includes all relevant information of commercial analysis of the power plant operation. Cost of fuel, revenue for the sale of electricity and, if applicable, the sale, or use, of steam, and/or the revenue from power reserve and/or frequency response capability provision may be part of and considered in the business model. Further influencing factors such as, but not limited to, maintenance cost, amortization cost, interest on invested capital, water cost, a tolerated risk level, information about lifetime consumption for different operating states, and/or the business horizon of the power plant operator may be part of and may be considered in the business model. Optimum of the business model may be defined on short, medium or long-term basis. A forecast profile of the business model inputs may be used to perform optimization of the power plant operating parameter to match the power plant operator operation targets and demands. A risk level optimization may be performed if an uncertainty of the outputs of the calibrated power plant model is available. Furthermore, the business model may use information about the reliability and the lifetime of the power plant to compute maintenance cost, including possible downtime. Said reliability predictions and information about the cost of replacement power provision for planned and unforeseen power outage and/or the cost of power outage may be used to compute an operation risk and the cost of operation risk, and/or may add to the maintenance cost. They are generated by the business model and may be applied to optimize the power plant operation.

A power plant lifetime model may be applied to provide input to the business model. The lifetime model may compute the lifetime consumption of certain power plant components, such as for instance, but not limited to, blades, vanes, the combustor, heat shields, and/or the rotor based on the operation profile of the power plant. It may be a statistical or deterministic model. For instance, the lifetime consumption calculation may be based upon statistical analysis of power system parts wear and/or degradation performed by the engine manufacturer. This might comprise historical data of customer engine parts, but also from other power plants. The component wear may be correlated to the operational profile, such as pressures, temperatures, the variable inlet guide vane position and so forth. It may also take into account for instance the gradient of load changes. The respective data may be stored in a database with the status of all reconditioned, scrapped and inspected parts, for the entire fleet of similar engines, by the manufacturer, thus resulting in the provision of a reliable data base. As a result, a specific lifetime prediction for the components of the power plant can be provided based upon the operation history, and a lifetime consumption dependent on the power plant operating parameter may be determined. The lifetime model may interact with, replace, or be replaced with the state of the art operating hours and load cycle based lifetime counters. Input to the lifetime model is provided by the calibrated power plant model. Output from the lifetime model is forwarded to the business model. Further, a reliability model may be applied to provide imput to the business model. The reliability model may incorporate all available statistical information about the likelihood of component failure or power plant outage at a certain operating condition. The reliability model uses data provided by the calibrated power plant model as an input. Output from the reliability model may be applied by the business model to determine operating risk.

The method may further apply a forecast model. In the forecast model, information about expected ambient conditions, such as a temperature forecast, the market conditions, such as actual and expected or forecast power demand and revenue for power delivery, may be stored and a load schedule may be defined. The forecast model may also incorporate machine learning algorithms to provide best estimates of non-available input parameters of the business model. For instance, the forecast model may use the history of the grid behavior to predict a likely future behavior. For instance, this may be used to modify the operation settings in a way that a certain rate of changes of grid frequencies can be fulfilled with the required power increase or decrease. For instance, if the system predicts with a certain likelihood that within a certain timeframe the grid frequency may drop by at maximum 1Hz at a maximum grid frequency gradient of 0.1Hz/s, this may be used as an input to the business model and the business model may commission the operating state or the operation settings such as to provide the required power reserve to compensate the maximum frequency drop at the forecast frequency drop gradient. On the other hand, the likelihood of not fulfilling the grid requirements with certain settings may be calculated. Dependent on the risk level taken in the business model, the operation settings may be chosen such that a certain risk of not fulfilling grid requirements is taken for the benefit of operating the power plant at a higher efficiency and revenue margin instead of providing the power reserve.

The method may further comprise a cloud database in which raw and post-processed values of the process condition signals, power plant health, and model settings of online and off-line optimization steps may be stored. It may be provided that such data is forwarded to a support center of a service provider, subject to user access rights.

Additional features of the method may be a model tuning and supervision by the service provider. In particular, the power plant model, the calibration algorithm, the lifetime and reliability models, and the optimizer or optimizers may be tuned by the service provider in order to improve the power plant prediction of reliability of availability, or probability of outage or a shortcoming of produced power, respectively, and lifetime consumption dependent on the operation condition.

A further feature of the method may be that the calibration process may be reviewed and influenced by the operator.

The method may further comprise an auto-mapping process. The automatic mapping process may be run with a certain frequency with or without request from the operator. Variables such as, but not limited to, the firing temperature, a variable inlet guide vane position, a coolant flow, a split of fuel between sequential combustors, the distribution of fuel to individual burners within a combustor or to different fuel discharge ports of individual combustors, a steam pressure, and/or steam temperature may be modified.

The method may be applied at steady-state operating conditions or at load gradients. The method may be applied at the operation on fuel gas, fuel oil, or a combination thereof. In particular, the method may determine which type of fuel to use, dependent on the fuel cost versus other operating cost which are influenced by the choice of fuel. The optimization of the power plant operation by the herein described method may include the activation of additional power plant subsystems such as, but not limited to, high-fogging, evaporation coolers, anti-icing, gas turbine inlet air preheating, fuel preheating, steam extraction, and so forth.

The settings which may be optimized and which may therefore be modified by the control system, that is, the at least one first operation parameter, may include, but not be limited to, a variable inlet guide vane position, settings of firing and/or exhaust temperature, the total supply of fuel to individual burners or the fuel distribution to different fuel discharge ports within a given burner or burners, catalyst operation, cooling air temperature settings, cooling air control valve settings, inlet cooling or inlet heating (externally with an air pre-heater or via anti-icing air from the gas turbine), shaft speed (when operating with a variable speed generator) and steam or water injection flow rate, steam pressure, and temperature within the water/steam cycle.

Further disclosed is a control system for a power plant which is adapted and configured to operate a power plant to the method as herein described. Accordingly, disclosed is a power plant comprising said control system.

In another aspect of the present disclosure a computer program product is disclosed which is adapted and configured to carry out the steps of a method as described above.

In still another aspect of the present disclosure a power plant is disclosed which is operated according to the method as described above.

In another aspect, the possibility may be provided to operate the power plant, or components and/or subsystems thereof, either according to the settings as determined by the herein disclosed method or with a static operation concept. The latter may be the original manufacturer supplied operation concept or the latest operation concepts provided by the above-described iterative optimization steps. Also, a fallback option may be provided in which the power plant, or components and/or subsystems thereof, is or are operated with a static operation concept, in particular according to the original manufacturer provided operation concept or a derated operation concept. This may serve as a safe backup concept, if for instance the herein described method fails to provide a convergent solution or provides an inconsistent solution. This might be the case for instance due to a failure of certain measurements or due to excessive component or subsystem wear or degradation. In another instance the herein described method may be run in the background, without actually and actively modifying the operation state or otherwise interfering with the power plant control. A potential performance gain, revenue gain, cost benefit or other benefit which would be achieved if operating the power plant according to the calculated enhanced settings could be displayed to the operator. It may be provided that the operator has the option to switch the power plant, or components or subsystems thereof, to an enhanced operation state in which the power plant or certain components or subsystems thereof, are operated with according to the operation parameters a calculated by the described method.

### BRIEF DESCRIPTION OF THE DRAWINGS

The subject matter of the present disclosure is now to be explained in more detail by means of selected exemplary embodiments shown in the accompanying drawings. The figures show
- Fig. 1: A simplified exemplary embodiment of a combined cycle power plant;
- Fig. 2: a block diagram of an exemplary embodiment of a control system capable of carrying out the method as herein described.

It is understood that the drawings are highly schematic, and details not required for instruction purposes may have been omitted for the ease of understanding and depiction. It is further understood that the drawings show only selected, illustrative embodiments, and embodiments not shown may still be well within the scope of the herein disclosed and/or claimed subject matter.

### EXEMPLARY MODES OF CARRYING OUT THE TEACHING OF THE PRESENT DISCLOSURE

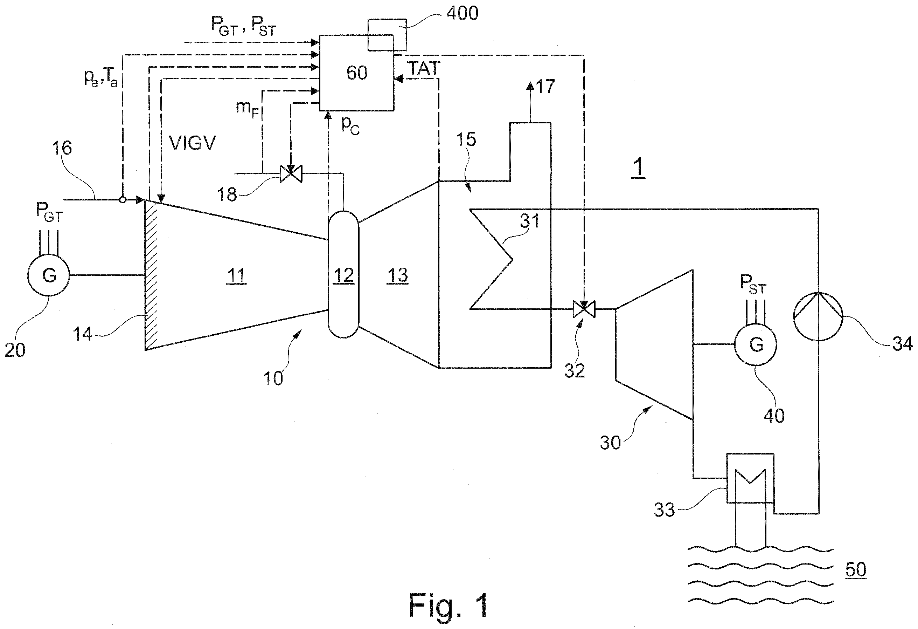

Figure 1 depicts in a much simplified embodiment a combined cycle power plant 1, comprising a gas turbine engine 10 driving a gas turbine generator 20. The gas turbine generator 20 generates an electrical power output P_{GT}. The gas turbine engine comprises a compressor 11, a combustor 12, and an expansion turbine 13. The gas turbine engine 10 is furthermore equipped with a variable inlet guide vane 14. The individual vanes of the variable inlet guide vane are arranged pivotably at the inlet of the compressor 11. In pivoting the inlet guide vanes into different positions, or pivot angles, the inlet mass flow to the compressor may be varied. Compressor 11 compresses inlet air 16, which compressed air is heated in the combustor 12. The heated compressed fluid, or combustion gases, from the combustor 12 are expanded in the expansion turbine 13. Expansion turbine 13 drives the compressor 11 and the gas turbine generator 20. Exhaust gas from the expansion turbine 13 flows through heat recovery steam generator 15 and evaporates feedwater supplied by feedwater pump 34 in evaporator/superheater 31 before it is discharged as exhaust gas 17. Steam generated in evaporator/superheater 31 is provided to steam turbine 30, where it is expanded, driving the steam turbine 30 and in turn steam turbine generator 40. Steam turbine generator 40 generates electrical power output P_{ST}. Expanded steam from steam turbine 30 is fed to a condenser 33. The condensate from the condenser 33 is pumped into evaporator/superheater 31 by feedwater pump 34, as lined out above. The condenser may for instance use cooling water from a river 50. A control system 60 receives signals representative of the electrical power output P_{GT} and P_{ST}, ambient conditions such as for instance ambient pressure pₐ and ambient temperature Tₐ, the temperature TAT after the expansion turbine 13, and a pressure p_{c} after the compressor 11. The control system 60 may receive a multitude of further signals, representatives of, for instance, but not limited to, the position of the variable inlet guide vane VIGV, a fuel mass flow m_{F}, exhaust gas composition and so forth. The control system may provide a multitude of control signals, such as to, for instance, but not limited to, control the position of the variable inlet guide vane, a fuel control valve 18, or a steam control valve 32. The combined electrical power output from the gas turbine generator 20 and the steam turbine generator 40 result in a combined plant power output. Plants are known in the art in which the steam turbine and a gas turbine drive a common generator. Plants are known in which a multitude of two or more gas turbines feed their exhaust gases into a common heat recovery steam generator. The gas turbine engine 10 may comprise multiple combustors with intermediate turbines provided between two combustors. Generally, the combined cycle power plant may be much more complex than in this simplified representation. For instance, a multitude of fuel and/or water or steam control valves may be provided at the gas turbine engine. The steam turbine may comprise a multitude of steam turbine units operating at different pressure levels. Various additional superheaters, economizers, and a heat exchange apparatus for transferring heat from the exhaust gas to the water/steam cycle may be provided in the heat recovery steam generator 15. The skilled person is familiar with the variety of possible and imaginable combined cycle power plant arrangements.

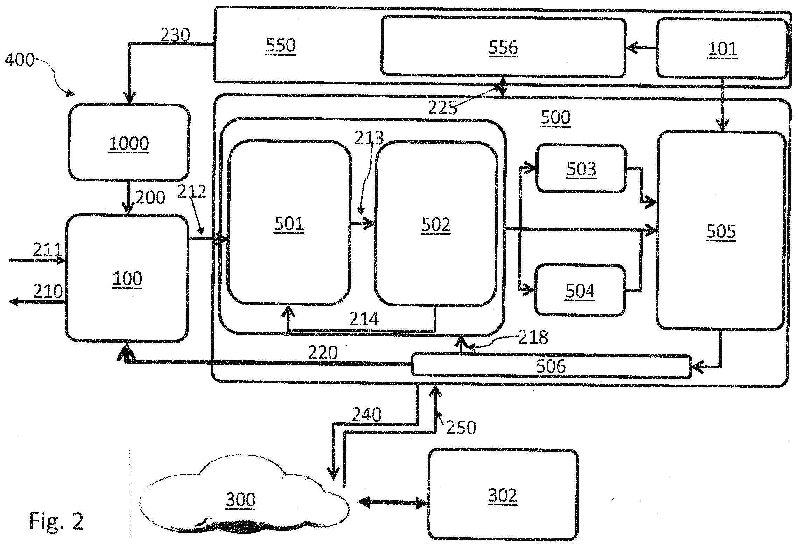

The control system 60 includes and/or is in connection with a thermo-economical optimization module 400. It is understood that parts of the thermo-economical optimization module may or may not be integrated in the control system 60 while other parts may be provided externally and communicate with the control system 60 through appropriate communication channels. An exemplary embodiment of optimization module 400 is shown in figure 2. A power dispatch controller 1000 provides a power target setpoint 200 to power plant controller 100. Power plant controller 100 stores one or more power plant first operation parameter settings for the power target setpoint and provides respective power plant control signals 210 to the power plant. It also receives measurement and feedback signals 211 from the power plant. A multitude of power plant systems may be controlled through control signals 210 in open or closed loop control. Power plant operation data are provided as an input 212 for a power plant model 501. Power plant model 501 computes a multitude of power plant operation parameters. These may include measurable process parameters, such as, for instance, temperatures, pressures, flow rates, compositions, and exhaust emission. Power plant model 501 also computes non-measurable operation parameters of interest, such as a parameter representative of the gas turbine firing temperature. It may be a combination of sub-models representing the power plant sub- systems, as lined out above. Measured and computed parameter values 213 are forwarded to a calibration module 502. The calibration module 502 compares measured and calculated values of certain parameters. Based upon the deviations of measured and computed values, the calibration module 502 provides correction factors 214 to the power plant model 501. The algorithms applied in the power plant model 501 are corrected responsive to the correction factors 214. Again, power plant model 501 computes a set of power plant operation parameters and forwards measured and computed data to the calibration module 502. This calibration loop is repeated until a best fit of the measured and computed values is achieved. As lined out above, a best fit needs to consider that a multi-dimensional optimization problem is solved. Thus, a best fit consideration may need to apply some mathematical algorithms in order to determine a minimum deviation of the measured and computed values for all parameters under consideration, as it may not be possible to achieve a zero deviation for all parameters considered at the same time. As a result, a calibrated power plant model is achieved. Output from the calibrated power plant model is provided to business model 505. Business model 505 stores a multitude of commercially relevant formation. This may include fuel cost and electricity price, price for delivered steam where applicable, maintenance cost, capital cost, power reserve price, water cost, a tolerated risk level, and any other operational cost or revenue. The business model may for instance also comprise information about the risk level accepted by the power plant operator. Furthermore, based upon output from the calibrated power plant model, the business model may receive an input from a lifetime model 503 and a reliability model 504. The business model 505 may furthermore receive input from a forecast module 101, which is intended to forecast, as reliable as possible, ambient conditions, market conditions, and so forth. In this respect, the business model may include a time horizon over which the forecast is provided. Business model 505 calculates operation cost and revenues as well as, for instance, maintenance cost, lifetime cost, capital cost and so forth, and may provide respective data for a current instant as well as a prediction over a certain time horizon of, for instance, some hours in the future by utilizing the input from the forecast module 101. An online optimizer 506 uses input from the business model 505 to determine an optimal trade-off between conflicting requirements such as maintenance cost and engine performance and efficiency, according to a plant operator operation target. The online optimizer 506 feeds an optimized solution 218 back to the power plant model. The power plant model recalculates power plant parameters at the optimal solution, and again forwards the resulting output to the business model 505. Once this optimization loop results in a converging solution, the resulting optimized operation settings 220 are forwarded to the power plant controller 100. Power plant controller 100 adjusts control signals 210 accordingly to operate the power plant at an optimized setpoint. From here, the online optimization process might start again. Power plant model 501, calibration module 502, business model 505, lifetime model 503, reliability model 504 and optimizer 506 may be said to form an online optimization module 500. In addition, an off-line optimization module 550 may be provided. Off-line optimization module 550 may comprise predictive module 556. Predictive module 556 may communicate with online module 500 through a communication port 225, in order to align the information of the online and off-line modules. The off-line optimization module 550 may use information from forecast module 101 as well as information from online module 500 in order to generate a forward power offer curve. Said forward power offer curve is provided to a power dispatch controller 1000 through a communication channel 230. By making use of the uncertainty of the information of the inputs to the business model, such as related to the statistical nature of the reliability and lifetime models and the reliability of the forecast data, such as forecast ambient conditions and forecast market conditions a multitude of forward power offer curves with certain confidence levels may be provided to the dispatch controller 1000. Dispatch controller 1000 may in turn provide the power target setpoint signal 200 to the power plant controller 100.

The lifetime model is intended to compute the lifetime consumption of the power plant main components based on the operation profile of the power plant. It may be a statistical or deterministic model, or a combination thereof. Also the reliability model 504 is a predictive model incorporating statistical information about the likelihood of failure at certain operation conditions. The plant manufacturer may collect information from the history of scrapped or reconditioned components and may perform an off-line lifetime analysis as represented at 302. This data may be collected in a cloud database 300. Furthermore, information 240 from the online optimization modules 500 and 550 may be collected in the cloud database 300. Information 250 from the cloud database may be used as an input to the optimization modules, and in particular to the lifetime and reliability modules.

With reference to the embodiment of figure 1, the system may decide to operate the power plant at a maximum efficiency, if, for any change in operation parameters, the incremental fuel cost per power output exceeds the savings in maintenance and lifetime cost related to operation at lower efficiency, wherein the efficiency may correlate with operation temperatures. In another instance, the system may decide to operate a gas turbine at a slightly de-rated setting, if fuel cost is low. In this respect, the teaching of the present disclosure may be combined with the teaching of EP 2 071 157. Also, the system may decide to close to steam control valve 32 of figure 1 slightly and de-rate the steam turbine power output and efficiency to provide a frequency response capability if the market pricing for providing frequency response capability is sufficiently high to offset for the shortcoming in revenue from sold energy and the incremental cost related to a reduced plant efficiency. The system may also decide to operate the gas turbine with a reduced exhaust temperature and reduce the steam turbine power output for the benefit of increased gas turbine efficiency if, for instance, the cooling water level in the river 50 is low during dry weather periods. Other modes of acting on the power plant operation are well-receivable and obvious by virtue of the present description. In another instance, there may two or more gas turbines feeding hot gases to one common heat recovery steam generator. The method may be applied to control each gas turbine individually to operate it at a gas turbine power output and other operation parameters which best suit the best achievable overall power plant operation state, e.g. best tradeoff between high efficiency, maintenance cost, wear, lifetime consumption, and environmental impact. Thus, different performance characteristics of the gas turbines due to different wear, assembly tolerances and so forth may be accounted for while achieving the best overall benefit for the power plant operator.

While the subject matter of the disclosure has been explained by means of exemplary embodiments, it is understood that these are in no way intended to limit the scope of the claimed invention. It will be appreciated that the claims cover embodiments not explicitly shown or disclosed herein, and embodiments deviating from those disclosed in the exemplary modes of carrying out the teaching of the present disclosure will still be covered by the claims.

### LIST OF REFERENCE NUMERALS

- 1: power plant
- 10: gas turbine engine
- 11: compressor
- 12: combustor
- 13: expansion turbine
- 14: variable inlet guide vane
- 15: heat recovery steam generator
- 16: inlet air
- 17: exhaust gas
- 18: fuel control valve
- 20: gas turbine generator
- 30: steam turbine
- 31: evaporator/superheater
- 32: steam control valve
- 33: condenser
- 34: feedwater pump
- 40: steam turbine generator
- 50: river
- 60: control system
- 100: power plant controller
- 101: forecast module
- 200: power target setpoint
- 210: power plant control signals, control output
- 211: power plant measured and feedback signals
- 212: input for power plant model
- 213: parameter value output form power plant model
- 214: correction factors
- 218: optimized solution
- 220: optimized operation settings
- 225: communication port
- 230: communication channel
- 240: information from optimization modules to cloud database
- 250: information from cloud database to optimization modules
- 300: cloud database
- 302: off-line lifetime analysis
- 400: optimization module
- 500: online optimization module
- 501: power plant model
- 502: calibration module
- 503: lifetime model
- 504: reliability model
- 505: business model
- 506: online optimizer
- 550: offline optimization module
- 556: predictive module
- 1000: power dispatch controller
- m_{F}: fuel mass flow
- pₐ: ambient pressure
- p_{c}: pressure after compressor
- P_{GT}: gas turbine electrical power output
- P_{ST}: gas turbine electrical power output
- Tₐ: ambient temperature
- TAT: ambient temperature after expansion turbine
- VIGV: position of the variable inlet guide vane

## Claims

1. A method for operating a power plant (1), the method comprising providing a power target setpoint (200) to a power plant controller (100), dependent on said power target setpoint (200), determining a setpoint of at least one first power plant operation parameter,
operating the power plant at a set power output (P_{GT}, P_{ST}) and with said at least one first operation parameter adjusted to the setpoint of said operation parameter,
applying a measurement to determine an actual value of at least one second operation parameter,
applying a theoretical power plant model (501) to determine an expected value of said at least one second operation parameter,
comparing the expected value of said at least one second operation parameter and said measured value of the at least one second operation parameter,
applying a calibration loop for the theoretical power plant model (501), said calibration loop comprising:
applying a comparison step to determine a deviation between the expected value of the at least one second operation parameter and the measured value of the at least one second operation parameter,
modifying the theoretical power plant model,
re-calculating the expected value of the at least one second operation parameter,
repeating the calibration loop until a best match between the expected value of the at least one second operation parameter and the measured value of the at least one second operation parameter is achieved,
thus obtaining a calibrated power plant model (501, 502) after terminating the calibration loop.
the method being **characterized by** further comprising applying the calibrated power plant model (501, 502) to forecast the at least one second operation parameter for a multitude of values of the at least one first operation parameter and at least for the set power output (PGT, PST), predicting a response of a power plant operating parameter on a variation of the at least one first operation parameter in applying the calibrated power plant model (501, 502),
adapting the setpoint of the at least one first operation parameter in order to adjust the power plant operating parameter to match with a power plant operator operation target, and
operating the power plant at the set power output (P_{GT}, P_{ST}) with the at least one first operation parameter adapted to the adapted setpoint of the at least one first operation parameter; wherein the power plant operating parameter is selected from the group comprising:
operation cost per power output;
environmental impact;
power plant reliability;
power plant power reserve;
power plant frequency response capability.

2. The method according to the preceding claim, **characterized in that** the operation cost per power output is calculated at least on the basis of one of:
fuel consumption per power output;
fuel cost;
maintenance cost;
lifetime consumption per power output;
water consumption per power output;
water cost;
capital cost per power output
emission tax.

3. The method according to any of the foregoing claims, **characterized in that** the environmental impact comprises at least one of
nitrogen oxides emission per power output,
carbon dioxide emission per power output,
carbon monoxide emission per power output,
unburnt hydrocarbons per power output,
water consumption per power output.

4. The method according to any of the foregoing claims, **characterized in that** adjusting the power plant operating parameter to the power plant operator targets comprises considering at least one of
an actual market price for power delivery,
a forecast market price development for power delivery,
an actual market price for power reserve provision,
a forecast market price for power reserve provision,
an actual market price for frequency response capability provision,
a forecast market price for frequency response capability provision.

5. The method according to claim 4, **characterized in that** the method comprises
calculating an actual operation cost per time unit at multiple load setpoints;
calculating an actual revenue per time unit at multiple load setpoints,
determining an load setpoint of maximum margin per time unit,
and providing said load setpoint of maximum margin as a power target setpoint (200) to the power plant controller (100).

6. The method according to claim 4, **characterized in that** it comprises
determining a forecast of operation cost per time unit for a given time interval and for a multitude of load setpoints and at a multitude of instances during the time interval,
determining a forecast of revenue per time unit for a given time interval and for a multitude of load setpoints and at a multitude of instances during the time interval,
determining a forward power offer curve generating a maximum margin during the time interval.

7. The method according to the preceding claim, **characterized in that** it comprises forwarding said forward power offer curve to a power dispatch controller (1000), and providing at any instance during the time interval a power target setpoint (200) according to said forward power offer curve to the power plant controller (100).

## Patentansprüche

1. Verfahren für den Betrieb eines Kraftwerks (1), welches Verfahren enthält:
Bereitstellen eines Leistungszielsollwerts (200) für eine Kraftwerksregelung (100), und in Abhängigkeit von dem Leistungszielsollwert (200), Ermitteln eines Sollwerts mindestens eines ersten Kraftwerksbetriebsparameters,
Betreiben des Kraftwerks mit einer eingestellten Leistungsabgabe (P_{GT}, P_{ST}) und mit dem mindestens einen ersten Betriebsparameter, der auf den Sollwert des Betriebsparameters eingestellt ist,
Anwenden einer Messung zum Ermitteln eines tatsächlichen Werts mindestens eines zweiten Betriebsparameters,
Anwenden eines theoretischen Kraftwerksmodells (501) zum Ermitteln eines erwarteten Werts des mindestens einen zweiten Betriebsparameters,
Vergleichen des erwarteten Werts des mindestens einen zweiten Betriebsparameters und des gemessenen Werts des mindestens einen zweiten Betriebsparameters,
Anwenden einer Kalibrierungsschleife für das theoretische Kraftwerksmodell (501), welche Kalibrierungsschleife enthält:
Anwenden eines Vergleichsschritts zum Ermitteln einer Abweichung zwischen dem erwarteten Wert des mindestens einen zweiten Betriebsparameters und dem gemessenen Wert des mindestens einen zweiten Betriebsparameters,
Modifizieren des theoretischen Kraftwerksmodells,
Neuberechnen des erwarteten Werts des mindestens einen zweiten Betriebsparameters,
Wiederholen der Kalibrierungsschleife, bis eine beste Übereinstimmung zwischen dem erwarteten Wert des mindestens einen zweiten Betriebsparameters und dem gemessenen Wert des mindestens einen zweiten Betriebsparameters erreicht wird,
wodurch ein kalibriertes Kraftwerksmodell (501, 502) nach Beendigung der Kalibrierungsschleife erhalten wird,
wobei das Verfahren **dadurch gekennzeichnet ist, dass** es ferner enthält:
Anwenden des kalibrierten Kraftwerksmodells (501, 502) zur Vorhersage des mindestens einen zweiten Betriebsparameters für eine Vielzahl von Werten des mindestens einen ersten Betriebsparameters und mindestens für die eingestellte Leistungsabgabe (P_{GT}, P_{ST}),
Vorhersagen einer Reaktion eines Kraftwerksbetriebsparameters auf eine Veränderung des mindestens einen ersten Betriebsparameters bei Anwendung des kalibrierten Kraftwerksmodells (501, 502),
Anpassen des Sollwerts des mindestens einen ersten Betriebsparameters, um den Kraftwerksbetriebsparameter so einzustellen, dass er mit einem Kraftwerksbetreiber-Betriebsziel übereinstimmt, und
Betreiben des Kraftwerks mit der eingestellten Leistungsabgabe (P_{GT}, P_{ST}) mit dem mindestens einen ersten Betriebsparameter, der an den angepassten Sollwert des mindestens einen ersten Betriebsparameters angepasst ist; wobei der Kraftwerksbetriebsparameter ausgewählt ist aus der Gruppe enthaltend:
Betriebskosten je Leistungsabgabe;
Umweltbelastung;
Zuverlässigkeit des Kraftwerks;
Leistungsreserve des Kraftwerks;
Frequenzanpassungsfähigkeit des Kraftwerks.

2. Verfahren nach dem vorhergehenden Anspruch, **dadurch gekennzeichnet, dass** die Betriebskosten je Leistungsabgabe mindestens auf der Basis eines der folgenden Punkte berechnet werden:
Brennstoffkosten;
Wartungskosten;
Verbrauch je Leistungsabgabe über die Lebensdauer;
Wasserverbrauch je Leistungsabgabe;
Wasserkosten;
Kapitalkosten je Leistungsabgabe;
Emissionssteuern.

3. Verfahren nach einem der vorhergehenden Ansprüche, **dadurch gekennzeichnet, dass** die Umweltbelastung mindestens einen der folgenden Punkte umfasst:
Stickstoffoxidemission je Leistungsabgabe,
Kohlendioxidemissionen je Leistungsabgabe,
Kohlenmonoxidemission je Leistungsabgabe,
unverbrannte Kohlenwasserstoffe je Leistungsabgabe,
Wasserverbrauch je Leistungsabgabe.

4. Verfahren nach einem der vorhergehenden Ansprüche, **dadurch gekennzeichnet, dass** das Einstellen der Kraftwerksbetriebsparameter auf die Kraftwerksbetreiberziele die Berücksichtigung mindestens eines der folgenden Punkte umfasst:
einen tatsächlichen Marktpreis für die Leistungslieferung,
eine vorhergesagte Marktpreisentwicklung für die Leistungslieferung,
einen tatsächlichen Marktpreis für die Bereitstellung von Leistungsreserve,
einen vorhergesagten Marktpreis für die Bereitstellung von Leistungsreserve,
einen tatsächlichen Marktpreis für die Bereitstellung von Frequenzanpassungsfähigkeit,
einen vorhergesagten Marktpreis für die Bereitstellung von Frequenzanpassungsfähigkeit.

5. Verfahren nach Anspruch 4, **dadurch gekennzeichnet, dass** das Verfahren enthält:
Berechnen von tatsächlichen Betriebskosten je Zeiteinheit bei mehreren Lastsollwerten;
Berechnen eines tatsächlichen Ertrags je Zeiteinheit bei mehreren Lastsollwerten,
Ermitteln eines Lastsollwerts der maximalen Gewinnspanne je Zeiteinheit,
und Bereitstellen des Lastsollwerts der maximalen Gewinnspanne als Leistungszielsollwert (200) für die Kraftwerksregelung (100) .

6. Verfahren nach Anspruch 4, **dadurch gekennzeichnet, dass** es enthält:
Ermitteln einer Vorhersage der Betriebskosten je Zeiteinheit für ein gegebenes Zeitintervall und für eine Vielzahl von Lastsollwerten und an einer Vielzahl von Momenten während des Zeitintervalls,
Ermitteln einer Vorhersage des Ertrags per Zeiteinheit für ein gegebenes Zeitintervall und für eine Vielzahl von Lastsollwerten und an einer Vielzahl von Momenten während des Zeitintervalls,
Ermitteln einer vorausgerichteten Leistungsangebotskurve, die eine maximale Gewinnspanne während des Zeitintervalls erzeugt.

7. Verfahren nach dem vorhergehenden Anspruch, **dadurch gekennzeichnet, dass** es das Weiterleiten der vorausgerichteten Leistungsangebotskurve an eine Lastverteilungsregulierung (1000) und Bereitstellen in jedem Moment während des Zeitintervalls eines Leistungszielsollwerts (200) gemäß der vorausgerichteten Leistungsangebotskurve für die Kraftwerksregelung (100) umfasst.

## Revendications

1. Procédé de fonctionnement d'une centrale électrique (1), le procédé comprenant les étapes ci-dessous consistant à :
fournir un point de consigne d'objectif de puissance (200) à un contrôleur de centrale électrique (100) ;
en fonction dudit point de consigne d'objectif de puissance (200), déterminer un point de consigne d'au moins un premier paramètre de fonctionnement de centrale électrique ;
faire fonctionner la centrale électrique à une puissance délivrée définie (P_{GT}, P_{ST}) et avec ledit au moins un premier paramètre de fonctionnement ajusté au point de consigne dudit paramètre de fonctionnement ;
appliquer une mesure en vue de déterminer une valeur réelle d'au moins un second paramètre de fonctionnement ;
appliquer un modèle de centrale électrique théorique (501) en vue de déterminer une valeur attendue dudit au moins un second paramètre de fonctionnement ;
comparer la valeur attendue dudit au moins un second paramètre de fonctionnement et ladite valeur mesurée dudit au moins un second paramètre de fonctionnement ;
appliquer une boucle d'étalonnage pour le modèle de centrale électrique théorique (501), ladite boucle d'étalonnage comprenant les étapes ci-dessous consistant à :
appliquer une étape de comparaison en vue de déterminer un écart entre la valeur attendue dudit au moins un second paramètre de fonctionnement et la valeur mesurée dudit au moins un second paramètre de fonctionnement ;
modifier le modèle de centrale électrique théorique ;
recalculer la valeur attendue dudit au moins un second paramètre de fonctionnement ;
répéter la boucle d'étalonnage jusqu'à ce qu'une correspondance optimale entre la valeur attendue dudit au moins un second paramètre de fonctionnement et la valeur mesurée dudit au moins un second paramètre de fonctionnement soit obtenue, ce qui permet d'obtenir par conséquent un modèle de centrale électrique étalonné (501, 502) après l'achèvement de la boucle d'étalonnage ;
le procédé étant **caractérisé en ce qu'**il comprend en outre les étapes ci-dessous consistant à :
appliquer le modèle de centrale électrique étalonné (501, 502) en vue de prédire ledit au moins un second paramètre de fonctionnement pour une multitude de valeurs dudit au moins un premier paramètre de fonctionnement et au moins pour la puissance délivrée définie (P_{GT}, P_{ST}) ;
prédire une réponse d'un paramètre de fonctionnement de centrale électrique sur une variation dudit au moins un premier paramètre de fonctionnement dans le cadre de l'application du modèle de centrale électrique étalonné (501, 502) ;
adapter le point de consigne dudit au moins un premier paramètre de fonctionnement en vue d'ajuster le paramètre de fonctionnement de centrale électrique afin qu'il corresponde à un objectif de fonctionnement d'opérateur de centrale électrique ; et
faire fonctionner la centrale électrique à la puissance délivrée définie (P_{GT}, P_{ST}) avec ledit au moins un premier paramètre de fonctionnement adapté au point de consigne adapté dudit au moins un premier paramètre de fonctionnement ; dans lequel le paramètre de fonctionnement de centrale électrique est sélectionné à partir du groupe comprenant les paramètres ci-dessous :
coût de fonctionnement par puissance délivrée ;
impact sur l'environnement ;
fiabilité de la centrale électrique ;
réserve de puissance de la centrale électrique ; et
capacité de réponse en fréquence de la centrale électrique.

2. Procédé selon la revendication précédente, **caractérisé en ce que** le coût de fonctionnement par puissance délivrée est calculé au moins sur la base de l'un des éléments suivants :
consommation de combustible par puissance délivrée ;
coût de combustible ;
coût de maintenance ;
consommation cumulative par puissance délivrée ;
consommation d'eau par puissance délivrée ;
coût en eau ;
coût en capital par puissance délivrée
taxe sur les émissions.

3. Procédé selon l'une quelconque des revendications précédentes, **caractérisé en ce que** l'impact sur l'environnement comprend au moins l'un des éléments suivants :
émission d'oxyde d'azote par puissance délivrée ;
émission de dioxyde de carbone par puissance délivrée ;
émission de monoxyde de carbone par puissance délivrée ;
hydrocarbures non brûlés par puissance délivrée ;
consommation d'eau par puissance délivrée.

4. Procédé selon l'une quelconque des revendications précédentes, **caractérisé en ce que** l'étape d'ajustement du paramètre de fonctionnement de centrale électrique aux objectifs d'opérateur de centrale électrique comprend l'étape consistant à tenir compte d'au moins l'un des éléments suivants :
un prix de marché réel pour la fourniture d'électricité ;
une évolution de prix de marché prévisionnel pour la fourniture d'électricité ;
un prix de marché réel pour la fourniture de réserve de puissance ;
un prix de marché prévisionnel pour la fourniture de réserve de puissance ;
un prix de marché réel pour la fourniture de capacité de réponse en fréquence ;
un prix de marché prévisionnel pour la fourniture de capacité de réponse en fréquence.

5. Procédé selon la revendication 4, **caractérisé en ce que** le procédé comprend les étapes ci-dessous consistant à :
calculer un coût de fonctionnement réel par unité de temps à de multiples points de consigne de charge ;
calculer une recette réelle par unité de temps à de multiples points de consigne de charge ;
déterminer un point de consigne de charge de marge maximale par unité de temps ; et
fournir ledit point de consigne de charge de marge maximale en tant qu'un point de consigne d'objectif de puissance (200), au contrôleur de centrale électrique (100).

6. Procédé selon la revendication 4, **caractérisé en ce qu'**il comprend les étapes ci-dessous consistant à :
déterminer une prédiction de coût de fonctionnement par unité de temps pour un intervalle de temps donné et pour une multitude de points de consigne de charge et à une multitude d'instances pendant l'intervalle de temps ;
déterminer une prédiction de recettes par unité de temps pour un intervalle de temps donné et pour une multitude de points de consigne de charge et à une multitude d'instances pendant l'intervalle de temps ;
déterminer une courbe d'offre de puissance incidente générant une marge maximale pendant l'intervalle de temps.

7. Procédé selon la revendication précédente, **caractérisé en ce qu'**il comprend l'étape consistant à acheminer ladite courbe d'offre de puissance incidente vers un contrôleur de répartition de puissance (1000), et l'étape consistant à fournir, à une quelconque instance pendant l'intervalle de temps, un point de consigne d'objectif de puissance (200), selon ladite courbe d'offre de puissance incidente, au contrôleur de centrale électrique (100).
